(19) Europäisches Patentamt

European Patent Office

Office européen des brevets

(11) Publication number : **0 580 359 A1**

(12) **EUROPEAN PATENT APPLICATION**

(21) Application number : 93305560.0

(22) Date of filing : 15.07.93

(51) Int. Cl.⁵ : **C08L 77/00,** C08L 77/06, B32B 27/14, // (C08L77/00, 69:00), (C08L77/06, 69:00)

(30) Priority : **20.07.92 US 916820**

(43) Date of publication of application :
**26.01.94 Bulletin 94/04**

(84) Designated Contracting States :
**DE ES FR GB IT NL**

(71) Applicant : **GENERAL ELECTRIC COMPANY
1 River Road
Schenectady, NY 12345 (US)**

(72) Inventor : **Willard, Fred G.
27 Wildwood
Parkersburg, West Virginia 26101 (US)**

(74) Representative : **Pratt, Richard Wilson et al
London Patent Operation G.E. Technical
Services Co. Inc. Essex House 12/13 Essex
Street
London WC2R 3AA (GB)**

(54) **Amorphous polyamide.**

(57)   An amorphous polyamide composition comprising in combination an amorphous polyamide and an aromatic polycarbonate in an amount sufficient to retard crystallization of the amorphous polyamide when exposure to moisture or water particularly at elevated temperatures. The amorphous polyamide composition of the present invention when utilized as one of the layers in a multilayer container provides a container that has improved rewashing cycles.

EP 0 580 359 A1

Field of the Invention

The instant invention is directed to the retarding of the crystallization of amorphous polyamide upon exposure to moisture particularly at elevated temperature by incorporating or blending with the amorphous polyamide minor amounts of a polycarbonate. The incorporation of the minor amounts of a polycarbonate does not affect the barrier properties of the amorphous polyamide when so employed as a barrier layer in a multilayer container where rewashing and refilling are wanted.

Description of the Related Art

Amorphous polyamide, because of its clarity and gas and moisture barrier properties, finds use in multilayer containers (bottles) where barrier properties are necessary with respect to carbonated beverages and where rewashing and refilling are wanted.

U.S. Patent 4,937,130 discloses multilayer containers that have as an intermediate layer an amorphous polyamide layer. The container has good barrier properties and hot filling capabilities. The patent further discloses that blends of amorphous polyamide and aromatic polycarbonate can be employed in certain of the layers of the multilayer container. The reference specifically discloses a blend of 50 weight percent of each polymer in such layer.

Also, copending U.S. Patent applications Attorney Docket Number 8CT5348, and 8CT5335 disclose multilayer containers having rewashing capabilities at elevated temperatures.

U.S Patent 4,798,874 discloses blends of polycarbonate and amorphous polyamide ranging from a ratio of 49/1 to 1/49 of amorphous polyamide to polycarbonate. However there appears to be no disclosure of minor amounts of polycarbonate being added to the amorphous polyamide.

The prior art therefore does not disclose the minor addition of an aromatic polycarbonate to an amorphous polyamide to retard crystallization of the amorphous polyamide on exposure to moisture at elevated temperatures.

Therefore it is an object of the instant invention to provide an amorphous polyamide composition containing an amount of an aromatic polycarbonate sufficient to retard crystallization of the amorphous polyamide when exposed to moisture at elevated temperatures.

Another object of the instant invention is to provide multilayer containers having at least one layer thereof being prepared from an amorphous polyamide composition having in combination therewith an amount of an aromatic polycarbonate sufficient to retard crystallization of the amorphous polyamide layer when the multilayer container is exposed to moisture particularly at elevated temperatures such as during rewashing.

Summary of the Invention

The instant invention is directed to the retarding of the crystallization of amorphous polyamide by the addition of minor amounts of an aromatic polycarbonate. The amount of polycarbonate to be added is that amount sufficient to retard crystallization of the amorphous polyamide when exposed to moisture particularly at 80°C. Preferably the amount of polycarbonate ranges from about 5 to about 15 weight percent based on the total weight of the composition of polyamide and polycarbonate. If the amount of polycarbonate added is above 15 weight percent, the barrier properties of the amorphous polyamide may be affected. At least it does not appear to further enhance the retarding of the crystallization of the amorphous polyamide. On the other hand, below about 5 weight percent of aromatic polycarbonate does not appear to effectively retard the crystallization of the amorphous polyamide.

In addition, the instant invention is directed to a multilayer container utilizing the amorphous polyamide composition herein. When such containers are exposed to elevated washing temperatures particularly at 80°C, the polyamide layer prepared from the composition of the instant invention resists crystallization. As such the amorphous polyamide layer remains clear and does not whiten. This allows the container or bottle to be reuseable by rewashing and refilling.

When an amorphous polyamide crystallizes, it turns white and in fact bubbles can even form in the polyamide layer when it is exposed to moisture at elevated temperatures. Crystallization can occur during a water washing cycle particularly at 80°C wherein the amorphous polyamide absorbs moisture. It is believed that the moisture or water absorption plasticizes the amorphous polyamide thereby significantly lowering the glass transition temperature of the polyamide. Lowering the glass transition temperature allows more movement among the polymer chains which in turn permits the alignment of polymer chains and hences solvent induced crystallization occurs.

Detailed Description of the Invention

Briefly, according to the instant invention, there is provided an amorphous polyamide composition comprising in combination an amorphous polyamide and an aromatic polycarbonate wherein the aromatic polycarbonate is present in an amount sufficient to retard or resist the crystallization of the amorphous polyamide when exposed to moisture or water particularly at elevated temperatures. Preferably, the amount of polycarbonate that can be employed herein is about 5 to about 15 weight percent based on the weight of the amorphous polyamide and polycarbonate combined. Additionally other additives can be incorporated in the amorphous polyamide composition providing such additives do not significantly affect the clarity or significantly reduce the glass transition temperature of the amorphous polyamide phase of the composition. Such additives may be stabilizers, such as antioxidants, ultraviolet stabilizers or color stabilizers, impact modifiers, etc.

When the amorphous polyamide composition of the present invention is utilized to prepare a component layer in a multilayer container, such an amorphous polyamide layer resists crystallization while retaining its barrier properties, stiffness and clarity even though it contains minor amounts of an aromatic polycarbonate. Such containers can be rewashed and reused without significant loss in clarity and barrier properties particularly when used with carbonated beverages. Multilayer containers in which the amorphous polyamide of the present invention can be used are disclosed in copending U.S. Patent applications Attorney Docket Number 8CT5348 and 8CT5335, both or which are assigned to the same assignee of the present invention. Further the amorphous polyamide composition herein disclosed can also be utilized in the multilayer container disclosed and claimed in U.S. Patent 4,937,130, which U.S. Patent and copending patent applications are incorporated herein by reference.

The amorphous polyamides utilized in the present invention are known amorphous polyamides and are generally those amorphous polyamides where clarity is wanted and exposure to moisture occurs particularly at elevated temperatures. This is particularly so when the amorphous polyamide is employed in multilayer containers where rewashing and refilling are wanted as is disclosed in the above copending patent applications and U.S. Patent 4,937,130. The amorphous polyamides of the present invention include the amorphous polyamides disclosed in the above copending patent applications and U.S. Patent 4,937,130 all of which have been incorporated herein by reference. The preferred amorphous polyamide is an amorphous polyamide having a glass transition temperature of at least 130°C and preferably about 140°C to about 180°C.

The aromatic polycarbonates employed in the present invention are well known aromatic polycarbonates and are disclosed in many U.S Patents such as U.S. Patents 2,999,835, 3,038,368, 3,334,154, 4,131,575, 3,525,712, 3,541,049, 3,544,514, 3,635,895, 3,816,373, 4,001,184, 4,294,953 and 4,204,049 all of which are incorporated herein by reference. Such aromatic polycarbonates are prepared from dihydroxyphenols and carbonate precursors. The polycarbonates utilized in the present invention may have a number average molecular weight from about 8,000 to about 80,000 and an intrinsic viscosity of about 0.35 to about 1.0 deciliters per gram (dl/g) as measured in methylene chloride at 25°C.

The dihydroxyphenols employed to prepare the aromatic polycarbonates are also well known in the art and are disclosed in the references recited above. It is also possible to use two or more different dihydroxyphenols in preparing the aromatic polycarbonates as is disclosed in the prior art.

The processes for preparing the aromatic polycarbonates employed in the present invention are also well known in the art such as in those U.S. Patents recited previously herein as well as U.S. Patent 4,937,130 and U.S Patent 4,513,037 both of which are incorporated by reference.

As also described in such prior art incorporated herein by reference, a carbonate precursor is employed to prepare the polycarbonates such as a carbonyl halide, a carbonate ester or a haloformate. Typically, a well known carbonate precursor particularly used in preparing polycarbonates is a carbonyl chloride.

The multilayer containers in which the amorphous polyamide composition is utilized as one of the component layers are the multilayer containers described and disclosed in the copending patent applications recited above and incorporated herein by reference, and in U.S. Patent 4,937,130 also incorporated herein by reference. These containers are prepared by the coextrusion blow molding process. The containers may be prepared by first coextruding the various layers of material, forming a parison and then blow molding the parison prior to its solidifying. The number of extrusion channels in the extrusion head depends on the number of layers being extruded. The thickness of the layers may be the same or they may be varied depending upon the shape of container, the liquid to be contained therein, the desired strength of the container, the rewashing cycle, the rewashing temperature and the rewashing solution. The combined minimum thickness of the layers forming the wall of the container is controlled by the need that the wall should be thick enough to provide sufficient strength, stiffness, rigidity and integrity to serve as an effective enclosure and container for a variety of liquids placed within the container.

The multilayer containers in which the amorphous polyamides of the present invention can be used as one of the component layers are multilayer containers comprising at least two layers adjacent to each other wherein the multilayer container has improved resistance to crystallization when exposed to moisture particularly at elevated temperatures. Progressing in a direction from outside the container to the inside thereof, the first layer is the outer layer which may comprise an aromatic polycarbonate having an intrinsic viscosity of at least 0.40 deciliters per gram (dl/g) as measured in methylene chloride at 25°C and a number average molecular weight of about 8,000 to about 50,000 or it may comprise two or more layers of different polycarbonates such as a branched polycarbonate layer and a silicone modified aromatic polycarbonate layer, or it may comprise a branched polycarbonate layer and a lactam modified amorphous polyamide layer as disclosed in the above copending patent applications. The next layer may be the intermediate barrier layer or it may be the inner layer if it is a two layer container wherein the said layer comprises at least one layer prepared from the amorphous polyamide composition of the present invention containing therein a minor amount of an aromatic polycarbonate sufficient to retard or resist crystallization of the amorphous polyamide when subjected to rewashing particularly at elevated temperatures. The amorphous polyamide generally has a glass transition temperature (Tg) of at least 130°C and preferably about 140°C to about 180°C and more particularly about 150°C to about 160°C.

If the layer prepared from the composition of the present invention is an intermediate layer, then the next layer is the inner layer wherein the inner layer may comprise a lactam modified amorphous polyamide or an aromatic polycarbonate layer or a combination of both layers. The aromatic polycarbonate layer may be a branched polycarbonate layer or a silicone modified polycarbonate layer or a combination of both polycarbonate layers. In either case, if the inner layer is a polycarbonate, it is preferred that the innermost layer be a silicone modified polycarbonate layer since this inner layer of the silicone modified polycarbonate can provide environmental stress crack resistance as disclosed in the previously recited copending patent application.

The multilayer container of the instant invention can also comprise an outer layer of a silicone modified polycarbonate layer comprising a block copolymer of a polycarbonate and an organopolysiloxane, an aromatic polycarbonate layer adjacent thereto wherein the polycarbonate is other than a silicone modified polycarbonate, another layer adjacent thereto comprising the amorphous polyamide composition of the present invention and an inner layer comprising an unmodified polycarbonate layer being adjacent to the amorphous polyamide layer.

The instant invention is directed to an amorphous polyamide composition containing minor amounts of an aromatic polycarbonate and to multilayer containers wherein at least one of the layers comprises the amorphous polyamide composition. The polycarbonate addition to the amorphous polyamide can be accomplished by melt blending the polycarbonate with the polyamide prior to blow molding the multilayer container or it may be regrind material comprising amorphous polyamide and aromatic polycarbonate blend which can be added to the appropriate melt layer during coextrusion of the thermoplastic layers for blow molding a multilayer container.

Another important consideration in choosing the amorphous polyamide is its index of refraction. To achieve the highest clarity for multilayer container use, it is preferable to match the refractive index of the polycarbonate as closely as possible to the refractive index of the amorphous polyamide. Even though the blend may not be compatible, cloudiness is not observed in such blends when the index of refraction of each polymer is matched as closely as possible.

While it is surprisingly discovered that minor amounts of the polycarbonate in the amorphous polyamide retards crystallization of the amorphous polyamide when exposed to moisture particularly at elevated temperatures, it has also been discovered that the composition when so employed to prepare containers appears to improve the melt strength of the parison during blow molding of a multilayer container. The melt strength of the parison during blow molding is one of the properties necessary for successful blow molding of multilayer containers.

Description of the Preferred Embodiment

The following examples are set forth to illustrate the present invention and are not to be construed as limiting the scope of the invention thereto. Unless otherwise indicated, all parts and percentages are on a weight bases.

Example 1

One-liter, three layer bottles were blow molded on a Bekum continuous coextrusion, shuttle-type blow molding machine equipped with four 50 mm extruders and a multimodular combining head. The head temperatures were set at about 485°F to 495°F, and the die was set at about 510°F. The mold temperature was set at about 70°F, and a dummy mold was used on the opposite side to allow faster cycle rates. All resins were dried before use.

A blow molding grade polycarbonate in pellet form (LEXAN® 154 resin manufactured by General Electric Company) having an average molecular weight of about 12,000 number average and an intrinsic viscosity of about 0.50 deciliters per gram (dl/g) as measured in methylene chloride at 25°C was extruded through extruders 1 and 4 to provide the inner and outer layers, respectively, of the bottle. Extruders 2 and 3 were combined to provide the required polyamide layer which was crystalline polyamide Nylon 6,6 available from E.I. DuPont Company as Zytel 101 with a melting point of about 265°C. Oxygen barrier values for packages were determined at 23°C and 21% relative humidity, and oxygen transmission rates for film were determined at 23°C and 50 to 75% relative humidity. Water vapor transmission rates were determined at 38°C and 100% relative humidity.

Although the bottles were clear as produced, the bottles began to turn cloudy within minutes as they began to cool and the polyamide layer crystallized. Five bottles were analyzed. Layer thicknesses were 24.4 mils outer layer of polycarbonate, 7.4 mils for the intermediate or middle layer of polyamide, and 8.8 mils for the inner layer of the polycarbonate for a total wall thickness of 40.6 mils. The average bottle weight was 106.7 grams. The container had an oxygen transmission value of 0.250 cc/pkg-day-atm. The individual film layers were removed for further testing. The optical properties of the polycarbonate layers were determined to have a light transmission of 90.5%, a yellowness index of 0.6 units, and a haze value of 11.9%. The crystalline polyamide layer showed a light transmission of 85.4%, a yellowness index of 0.3 units, and a haze value of 78.9%. This high haze value for the polyamide layer explains the cloudiness of the bottle. The oxygen transmission rate of the nylon film was 0.92 cc-mil/100 in$^2$-day-atm, and the water vapor transmission rate was 15.1 gram-mil/100in$^2$-day-atm.

Example 2

Example 1 was repeated except that the three layer bottles were formed using an amorphous polyamide, Nylon 6,I/T available as Gelon A100-1100 from General Electric Company instead of the crystalline polyamide of Example 1. Five bottles were analyzed. The average bottle weight was 109.4 grams. Layer thicknesses were 22.4 mils outer layer of the polycarbonate, 13.2 mils of the intermediate or middle polyamide layer, and 10.0 mils inner layer of the polycarbonate. The container had an oxygen transmission value of 0.275 cc/pkg-day-atm. The individual film layers were removed for further testing. The optical properties of the polycarbonate layers were determined to have a light transmission of 90.6%, a yellowness index of 0.6 units, and a haze value of 1.6%. The amorphous polyamide layer showed a light transmission of 90.6%, a yellowness index of 2.4 units, and a haze value of 2.7%. This low haze value of the nylon layer explains the excellent clarity of the bottle. The oxygen transmission rate of the nylon film was 1.1 cc-mil/100in$^2$-day-atm, and the water vapor transmission rate was 3.6 gram-mil/100in$^2$-day-atm. The bottles were then subjected to repeated 10 minute washing cycles in a noncaustic bath at 80°C. The polyamide layer began to crystallize and turned white after as few as 5 cycles.

Example 3

Three layer, 1.5 liter bottles were blow molded on a Bekum continuous coextrusion, shuttle-type blow molding machine equipped with five extruders and a multimodular combining head. The head temperatures were set at about 485°F to 495°, and the die was set at about 510°F. The mold temperature was set at about 70°F, and a dummy mold was used on the opposite side to allow faster cycle rates. All resins were dried before use. A blow molding grade of polycarbonate in pellet form available from General Electric Company as LEXAN 154 resin used in Example 1 above was extruded through extruders 1 and 5 to provide the inner and outer layers, respectively, of the bottles. Extruders 2, 3, and 4 were combined to provide the required middle polyamide layers which was Nylon 6,I/T amorphous polyamide.

The average bottle weight was 105 grams. The structure had an outer layer thickness of about 20.4 mils, an intermediate or middle layer thickness of about 8.2 mils and an inner layer thickness of about 9.7 mils for a total wall thickness of about 38.3 mils.

The oxygen transmission rate of the nylon film was 1.1 cc-mil/100in$^2$-day-atm, and the water vapor transmission rate was 3.6 gram-mil/100 in$^2$-day-atm. During repeated 10 minute washing cycles in a noncaustic bath at 80°C, the Nylon 6,I/T begins to crystallize and turn white after as few as 5 cycles.

Example 4

Three-layer, 1.5-liter bottles were blow molded as in Example 3 except that the middle amorphous layer was an 85/15 weight percent amorphous Nylon 6,I/T/ polycarbonate blend based on the weight of the blend.

The polycarbonate employed herein was the LEXAN 154 resin disclosed in Example 3 above. The average bottle weight was 105 grams. Layer thicknesses were 23.5 mils outer layer of the polycarbonate, 13.0 mils of the intermediate or middle layer of the blend, and 7.9 mils inner layer of the polycarbonate for a total wall thickness of 44.4 mils. The oxygen transmission rate of the blend as determined on 12 mil extruded film was 1.4 cc-mil/100in$^2$-day-atm, and the water vapor transmission rate was 3.6 gram-mil/100 in$^2$-day-atm. Similarly, the oxygen transmission rate of a 75/25 Nylon 6I/T polycarbonate blend extruded into a 12 mil film was 1.8 cc-mil/100in$^2$-day-atm, and the water vapor transmission rate was 3.9 gram-mil/100 in$^2$-day-atm. Polycarbonate has an oxygen transmission rate of 234 cc-mil/100in$^2$-day-atm, and the water vapor transmission rate was 14.0 gram-mil/100in$^2$-day-atm. It was possible to complete over 10 washing cycles of 10 minute duration each on the bottles in a noncaustic solution at 80°C before crystallization started as evidenced by whitening. This Example demonstrates the present invention in that the polyamide composition retards crystallization of the amorphous polyamide. The bottles were able to complete over 10 washing cycles as compared to Examples 1, 2 and 3 above.

Example 5

In order to further demonstrate the properties of the present invention, several polyamide films were prepared by extrusion using a single screw extruder and extruding the films under standard extrusion conditions. The films were separately prepared using three different amorphous polyamide compositions. The compositions were Nylon 6, I/T, Nylon 6,I and a 85/15 weight percent blend of amorphous polyamide (Nylon G, I/T) and polycarbonate (LEXAN 154 resin).

The film samples were then immersed in a water bath at about 80°C. Actually the water bath was at 81.3°C. At various time intervals, a sample of each film composition was withdrawn and immediately tested for storage modulus value by Dynamic Mechanical Analysis in accordance with ASTM4065 procedure. The results obtained were as follows:

### Storage Modulus (G'kpsi)

| Time (Minutes) | Nylon 6,I/T | Nylon 6,I | Nylon Polycarbonate Blend |
|---|---|---|---|
| 0 | 376 | 396 | 295 |
| 10 | 329 | 306 | 298 |
| 20 | 100* | 271 | 256 |
| 30 | 70* | 107 | 324 |
| 60 | 233* | 315* | 310 |

### * Crystallized - Whitened

The results clearly demonstrate that amorphous polyamide when exposed to moisture or water is significantly affected by moisture pick up. The results for Nylon 6,I/T and Nylon 6,I show that these sample had significant Storage Modulus loss indicating that the Nylons were being plasticized by the water and this crystallized.

Storage Modulus is a measure of stiffness and the higher the modulus, the stiffer the material. While the 6,I/T and 6,I Nylons increased in Storage Modulus stiffness, upon exposure for up to 60 minutes in water, they crystallized and thus lose clarity. This would render these Nylons as unsuitable for bottles where rewashing is wanted.

However, the blend, as demonstrated from the results, did not lose stiffness as shown by the Storage Modulus values and did not crystallize.

**Claims**

1. An amorphous polyamide composition comprising in combination an amorphous polyamide and a minor amount of an aromatic polycarbonate sufficient to retard crystallization of the amorphous polyamide when exposed to moisture.

2. The composition of claim 1. wherein the amount of polycarbonate comprises about 5 to about 15 weight percent based on the weight of the combination of amorphous polyamide and aromatic polycarbonate.

3. An amorphous polyamide composition consisting essentially of in combination an amorphous polyamide and a minor amount of an aromatic polycarbonate sufficient to retard crystallization of the amorphous polyamide when exposed to moisture.

4. The composition of claim 3. wherein the amount of polycarbonate is about 5 to 15 weight percent based on the weight of the combination of amorphous polyamide and aromatic polycarbonate.

5. An improved multilayer container comprising in combination at least two adjacent layers of thermoplastic polymer wherein at least one layer thereof is an amorphous polyamide layer; the improvement being the amorphous polyamide layer wherein said layer consists essentially of in combination an amorphous polyamide and a minor amount of an aromatic polycarbonate sufficient to retard crystallization of the amorphous polyamide when exposed to moisture.

6. The multilayer container of claim 5. wherein the amorphous polyamide layer has in combination an amorphous polyamide and about 5 to about 15 weight percent of an aromatic polycarbonate based on the combined weight of amorphous polyamide and aromatic polycarbonate.

7. The multilayer container of claim 5. wherein the container has adjacent layers comprising an outer layer, an intermediate layer and an inner layer wherein one layer thereof is an amorphous polyamide layer consisting essentially of in combination an amorphous polyamide and about 5 to 15 weight percent of an aromatic polycarbonate based on the weight of the amorphous polyamide and polycarbonate.

European Patent Office

**EUROPEAN SEARCH REPORT**

Application Number

EP 93 30 5560

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 457 103 (BAYER) | 1-4 | C08L77/00 |
| Y | * claims * | 5-7 | C08L77/06 B32B27/14 //(C08L77/00, |
| X | EP-A-0 235 384 (GENERAL ELECTRIC) | 1-4 | L69:00) (C08L77/06, |
| Y | * the whole document * | 5-7 | L69:00) |
| D | & US-A-4 798 874 (L.M. MARESCA) | | |
| X | EP-A-0 285 692 (GENERAL ELECTRIC) * the whole document * | 1-4 | |
| X | EP-A-0 227 053 (GENERAL ELECTRIC) * page 1, line 9 - page 2, line 16; claims 1,2,10 * | 1-4 | |
| Y | * page 7, line 43 - line 49 * | 5-7 | |
| Y,D | US-A-4 937 130 (D.C. CLAGETT ET AL.) * the whole document * | 5-7 | |

TECHNICAL FIELDS SEARCHED (Int. Cl.5)

C08L
B32B

The present search report has been drawn up for all claims

| Place of search | Date of completion of the search | Examiner |
|---|---|---|
| THE HAGUE | 20 OCTOBER 1993 | LEROY ALAIN |

EPO FORM 1503 03.82 (P0401)